Europäisches Patentamt

European Patent Office

Office européen des brevets

(11) Publication number: **0 186 926 B1**

# (12) EUROPEAN PATENT SPECIFICATION

(45) Date of publication of patent specification:
16.01.91 Bulletin 91/03

(51) Int. Cl.$^5$: **C08F 279/02, C08F 2/22**

(21) Application number: **85202048.6**

(22) Date of filing: **11.12.85**

(54) **Method for the preparation of graft copolymers by emulsion copolymerization.**

The file contains technical information submitted after the application was filed and not included in this specification

(30) Priority: **18.12.84 IT 2411384**

(43) Date of publication of application:
**09.07.86 Bulletin 86/28**

(45) Publication of the grant of the patent:
**16.01.91 Bulletin 91/03**

(84) Designated Contracting States:
**AT BE CH DE FR GB LI LU NL SE**

(56) References cited:
**DE-A- 2 038 738
FR-A- 2 008 612
FR-A- 2 051 451
US-A- 3 442 979
US-A- 3 907 928**

(73) Proprietor: **ENICHEM TECNORESINE S.p.A.
Via Ruggero Settimo 55
I-90139 Palermo (IT)**

(72) Inventor: **Ferraresi, Andrea
Via Bologna 137/H
I-44100 Ferrara (IT)**
Inventor: **Griselli, Pierluigi
Via Terranova 23
I-44100 Ferrara (IT)**

(74) Representative: **Roggero, Sergio et al
Ing. Barzanò & Zanardo Milano S.p.A. Via
Borgonuovo 10
I-20121 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for grafting a vinylaromatic monomer and an acrylic monomer on polybutadiene by emulsion polymerization.

The prior art, as represented by US-A-3 442 979 discloses a process for the preparation of graft polymers on the basis of polybutadiene by first adding part of an emulsion of polybutadiene, styrene and acrylonitrile and other compounds to a reaction vessel, starting the polymerization and then adding the rest of the emulsion, the particle size of the polybutadiene latex being from 0,08 micrometer to 0,304 micrometer, said latex being used as the basis for the acrylonitrile-styrene graft. DE-A-2 038 738 and FR-A-2 051 451 disclose processes for the grafting of a butadiene polymer with a particle size range of 0,2 to 0,6 micrometer by first grafting 20% to 80% of the acrylonitrile-styrene monomers onto the polybutadiene and, when at least one half of that amount has been converted, adding the remaining amount of the acrylonitrile-styrene monomers. Moreover, EP-A-0 000 462 discloses a process of graft polymerization in which the technologies of emulsion polymerization and polymerization in suspension are sequentially used.

In order to obtain better products and a smoother processing run, the present invention provides a process for grafting a vinylaromatic monomer and an acrylic monomer on polybutadiene by emulsion polymerizing, in the presence of a monomodal polybutadiene latex having a particle diameter comprised between 0,08μm and 0,25μm, to which a stabilizer-emulsifier has been added, a mixture of a vinylaromatic monomer and an acrylic monomer, adding a further portion of monomodal polybutadiene and a further amount of said vinylaromatic and said acrylic monomer when the reaction conversion is between 70% and 90% of the supplied monomers, in the presence of from 0,01% to 3% by weight, relative to the reactive compounds, of a water-soluble initiator, and completing the emulsion polymerization, characterized in that said water-soluble initiator is activated by a reducing agent selected from among sodium bisulphite and salts or complexes of iron and low-valence transition metals, preferably Co, Ni and Cu.

The polybutadiene latex useable in the grafting-polymerization according to the present invention comprises a monomodal polymer characterized by an extremely narrow granulometric distribution, the average particle diameter being comprised within the range of from 0,08 μm to 0,25 μm (800 to 2500 A) and, preferably, within the range of from 0,13 μm to 0,16 μm (1300 to 1600 A).

In the first polymerization step, up to 90% is used of the overall amount of polybutadiene which shall enter into the end composition of graft polymer, the residual amount being added during the second step, when the grafting-polymerization reaction has exceeded the 70-90% conversion level, relatively to monomers introduced.

The grafting in emulsion is favoured by the presence of stabilizers-emulsifiers, directly inside polybutadiene latex.

Stabilizer systems are those usually used to that purpose, such, e.g., the soaps of fatty acids, alkyl- or aryl-alkyl sulphonates, the salts of resin acids : of particular interest has resulted the use of a potassium alkylsulphonate, and'the sodium salt of disproportionated resin acid.

The monomers to be polymerized and grafted can be introduced throughout the step of emulsion polymerization ; they can be introduced as well separately or as mixtures, continuously or as sequential batches, as such or suitably emulsified.

As mentioned, the grafting-polymerization envisages the use, according to what just mentioned, of a mixture comprising at least a vinylaromatic derivative, and at least an acryl or methacryl derivative.

Among vinylaromatic derivatives, styrene, α-methylstyrene, substituted styrenes can be mentioned : above all, styrene.

Among acryl or methacryl derivatives to exemplifying purposes acrylic acid and methacrylic acid, methyl acrylate, ethyl acrylate, and corresponding methacrylates, acrylonitrile and methacrylonitrile can be mentioned.

Of particular interest results the use of styrene-acrylonitrile and styrene-acrylonitrile-α-methylstyrene, in particular in view of the subsequent use of graft polymer for the preparation of ABS resins.

In the just mentioned case, the monomers are used in weight ratios, styrene/acrylonitrile, ranging from 60/40 to 80/20, preferably of 70/30.

The reaction is carried out at a temperature comprised within the range of from 50 to 80°C, in the presence of an initiator selected among water-soluble initiators, traditionally efficacious in emulsion polymerization, of peroxide type : potassium persulphate or ammonium persulphate, organic peroxides, hydroperoxides and peracids.

The amount of initiator must be comprised within the range of from 0.001 to 3.0%, and preferably of from 0.005% to 1.0% of the reactive compounds, by wieght particularly indicated has resulted to be use of complex redox system $Fe^{2+}$ –EDTA/cumene hydroperoxide.

Of course, any other catalyst known for this type of reaction can be used to accomplish the grafting-polymerization reaction according to the present invention.

Chain-transfer agents are used to adjust graft copol ymer's molecular weight, and to control polymer fluidity. The most commonly used are straight or branched mercaptans, thioethers, α-methylstyrene dimers, certain olefinic compounds and terpenic derivatives.

The amount of chain-transfer agent must be comprised within the range of from 0.001 to 1.0.% by weight.

When the partial conversion of monomers supplied has reached the level of 70-90% by weight, the addition of the residual amount of monomodal polybutadiene latex is started (up to 20% of the total to be used at maximum).

Such polydutadiene can have a granulometry with mode centre different from the one initially charged, but always with distribution monomodal and comprised within the range as defined.

Together with polybutadiene, additional amounts of the same monomers as used in the first step are added.

The reaction temperature, the operating modalities, the emulsifier agents and the catalysts are the same as provided for the carrying out of the first step.

When the conversion exceeds the 94-96% level, the reaction is stopped by means of the addition of a suitable inhibitor (e.g., hydroxylamine sulphate).

The process mentioned, being the object of the present invention, allows graft copolymers containing a polybutadiene amount comprised within the range of from 10 to 70%, preferably of from 40 to 60%, to be obtained.

All what previously disclosed and other operating modalities shall result more evident from the reading of the following illustrative examples, which are not however be intended as limitative of the invention.

## Example 1

Into a glass reaction vessel of 5 l in capacity, 40% by weighl of polybutadiene latex with a concentration of 34.8% and whose characteristics are reported in Table 1 ; and 3.5% (referred to dry polybutadiene) of a surfactant of alkyl-sulphonate type in solution at 23% are added.

Reactor's temperature in increased to T = 70°C under stirring (rpm = 250) and under a slight nitrogen atmosphere.

The 1st step is then started, with the continuous feeding of the following emulsion of monomers :

| | |
|---|---|
| Styrene | 30.4 % by weight |
| acrylonitrile | 9.6 % " |
| demineralized water | 44.5 % " |
| alkyl-sulphonate | 0.64 % " |
| NaOH | 0.08 % " |
| Na-formaldehyde sulphoxylate | 0.12 % " |

The continuous feeding of the monomer mixture is carried out by means of a metering pump, which is so adjusted as to supply the emulsion over 2h30 min.

Contemporaneously to the monomer emulsion the initiator is separately supplied, over a 3h45 min time, composed by the following redox system :

| | |
|---|---|
| $Fe^{++}$/EDTA complex | 0.067 % by weight |
| cumene hydroperoxide | 0.094 % " |

At the end of monomer emulsion feeding, when the partial conversion is of about 70-80% by weight, the 2nd step begins.

Over a time of 5 min., 10% by wieght of polybutadiened having the same characteristics as that used in the 1st step are added, and then sequentially the following monomer emulsion :

| | |
|---|---|
| Styrene | 7.6% by weight |
| acrylonitrile | 2.4 " |
| demineralized water | 11 " |
| alkyl-sulphonate | 0.16 " |
| NaOH | 0.02 " |
| Na-formaldehyde sulphoxylate | 0.03 " |

is added.

This emulsion is added over a 10 min time by a metering pump. At the end of the catalytic system feeding, the reaction mass is kept standing at T = 70°C over 1h. This allows achieving a conversion of 94-96% with an end yield of dry matter of 37%.

At the end of the reaction, a reaction inhibitor (0.08 pphm of hydroxylamine sulphate) is added.

The residual unreacted monomers are removed by steam stream extraction at T = 100°C over 1h30 min.

Graft polybutadiene so obtained is coagulated with a solution of $CaCl_2$ at 35%, separated, washed and dried at T = 70-80°C in fluid-bed drier.

Dried material is thed blended in a Banbury-type blend er with a styrene-acrylonitrile copolymer with a ST/ACN ratio = 71/29, respectively in the ratios :

| | |
|---|---|
| graft polymer/ST-ACN copolymer: | 1 - 20/80 |
| | 2 - 35/65 |
| | 3 - 50/50 |
| | 4 - 70/30 |

In Table N° 2 the physical-mechanical properties are evidenced of the products obtained with the ratios as mentioned.

(COMPARATIVE) EXAMPLE-2 (Monoclonal PB, and single step)

Into a glass reaction vessel of 5 l of capacity, 50 pphm of a polybutadiene latex, whose characteristics are reported in Table N° 1, and 3.5 pp (referred on polybutadiene dry weight) of a surfactant of alkyl-sulphonate type in solution at 23% are added.

Reactor's temperature is increased to T = 70°C, under stirring,/(250 RPM) and under a slight nitrogen atmosphere. When temperature mentioned is reached, the continuous feeding over a 2h45′ time begins of following monomer emulsion :

| | |
|---|---|
| Styrene | 38% by weight |
| acrylonitrile | 12% " |
| demineralized water | 55.5% " |
| alkyl-sulphonate | 0.80% " |
| NaOH | 0.10% " |
| Na-Formaldehyde sulphoxylate | 0.15% by weight |

4

Contemporaneously to the monomer feed, the initiator, composed by the following redox system :

$$Fe^{+++}/EDTA \qquad 0.067\% \text{ by weight}$$

$$Cumene\ hydroperoxide \qquad 0.094 \qquad "$$

is separately supplied, in continuous, over a 3h45 min time.

At the end of catalytic system feeding, the reaction mass is kept standing at T = 70°C over one hour. This allous a conversion of 94-96%, with and end dry matter production of 37%, to be reached.

At the end of the reaction, a reaction inhibitor (0.08 pphm of hydroxylamine) is added.

The residual unreacted monomers are removed by steam stream extraction at T = 100°C over 1h30 min.

Graft polybutadiene so obtained is coagulated with a $CaCl_2$ solution at 35%, separated, washed and dried at T = 70-80°C in fluid bed drier.

Dried matter is then blended in a Banbury-type blender with a styrene-acrylonitrile copolymer, having a St/ACN ratio = 71/29, respectively in the ratios :

```
graft polymer/St/ACN copolymer: 1 - 20/80

                                 2 - 35/65

                                 3 - 50/50
```

In Table N° 3 the physical-mechanical properties of obtained products are reported.

(COMPARATIVE) EXAMPLE-3 (Bimodal PB and one step only)

The formulation and operating modalities are the same as those reported in comparative Example N° 3, with the exception that polybutadiene latex has a bimodal granulometric distribution, with mode centres respectively at 0,15 μm and 0,4 μm (1500 Å and 4000 Å), and hence with an overall particle dis distribution within the range of from (0,08 μm to 0,7 μm)(800 to 7000 Å.)

The blending ratios with styrene-acrylonitrile are the same as shown in comparative Example N° 3.

In Table N° 4 the physical-mechanical properties of products obtained are evidenced,

## Table N° 1

**Characteristics of Polybutadiene Latex**

| | | |
|---|---|---|
| pH | 8.0 | - |
| Surface tension | $66,4 \times 10^{-5}\ N/cm$ | (66.4 dyne/cm) |
| Average surface diameter | $0,15\ \mu m$ | (1500 Å) |
| Mooney Viscosity (ML 1+4, T=100°C) | 90 | - |
| Gel content | 87 | % by weight |
| Swelling index | 17 | % by weight |
| Dry content | 34.8 | % by weight |
| Surfactant covering on particles | 27.5 | % by weight |

5

Table N° 2

Physical-mechanical characteristics of ABS resins obtained by two-step grafting of PB.

| | | Experimental Examples | | | |
|---|---|---|---|---|---|
| | | _1_ | _2_ | _3_ | _4_ |
| Graft polymer fraction | % by weight | 20 | 35 | 50 | 70 |
| ST/ACN copolymer fraction | % by weight | 80 | 65 | 50 | 30 |
| Resilience, IZOD 1/4" + 23°C (ASTM D-256) | J/m | 40 | 210 | 330 | 330 |
| Hardness "R" (ASTM D-785) | - | 118 | 112 | 102 | 87 |
| Helix fluidity: T = 200°C (MA-42037) | cm | 23 | 19 | 17.5 | 14.5 |
| 230°C | cm | 34 | 28 | 22 | 17 |
| 250°C | cm | 41 | 32 | 25 | 18.5 |
| Vicat (5 kg - 120°C/h) (ASTM D-1525/A) | °C | 101 | 99 | 96 | 90 |

Table N° 3

Physical-mechanical characteristics of ABS resins obtained by traditional grafting and monomodal PB.

| | | Comparative Examples | | |
|---|---|---|---|---|
| | | _1_ | _2_ | _3_ |
| Graft Polymer fraction | % by weight | 20 | 35 | 50 |
| ST/ACN copolymer fraction | % by weight | 80 | 65 | 50 |
| Resilience, IZOD 1/4" + 23°C (ASTM D-256) | J/m | 25 | 40 | 60 |
| Hardness "R" (ASTM D-785) | - | 116 | 111 | 104 |
| Helix fluidity: T = 200°C (MA-42037) | cm | 26 | 23 | 20 |
| 230°C | cm | 34 | 27 | 21 |
| 250°C | cm | 43 | 35 | 27 |
| Vicat (5 kg - 120°C/h) (ASTM D-1525/A) | °C | 101 | 99 | 97 |

Table N° 4

Physical-mechanical characteristics of ABS resins obtained by traditional grafting and bimodal PB

| | | Comparative Examples | | | |
|---|---|---|---|---|---|
| | | 1 | 2 | 3 | 4 |
| Graft polymer fraction | % by weight | 20 | 35 | 50 | 70 |
| ST/ACN copolymer fraction | % by weight | 80 | 65 | 50 | 30 |
| Resilience, IZOD 1/4" + 23°C (ASTM D - 256) | J/m | 80 | 220 | 310 | 350 |
| Hardness "R" (ASTM D-785) | - | 115 | 108 | 100 | 89 |
| Helix fluidity: T = 200°C | cm | 24 | 20 | 18 | 15.5 |
| (MA-42037)            230°C | cm | 35 | 29 | 24 | 17 |
| 250C° | cm | 44 | 37 | 29 | 20 |
| Vicat (5 kg - 120°C/h (ASTM D - 1525/A) | °C | 101 | 99 | 96 | 90 |

**Claims**

1.Process for grafting a vinylaromatic monomer and an acrylic monomer on polybutadiene by emulsion polymerizing, in the presence of a monomodal polybutadiene latex having a particle diameter comprised between 0,08 μm and 0,25 μm, to which a stabilizer-emulsifier has been added, a mixture of a vinylaromatic monomer and an acrylic monomer, adding a further portion of monomodal polybutadiene and a further amount of said vinylaromatic and said acrylic monomer when the reaction conversion is between 70% and 90% of the supplied monomers, in the presence of from 0,001% to 3% by weight, relative to the reactive compounds, of a water-soluble initiator, and completing the emulsion polymerization, characterized in that said watersoluble initiator is activated by a reducing agent selected from among sodium bisulphite and salts or complexes of iron and low-valence transition metals.

2. Process according to claim 1, wherein said stabilizer-emulsifier is selected from among fatty acid soaps, alkyl sulphonates, aryl-alkyl sulphonates, and salts of resin acids.

3. Process according to claim 2, wherein said stabilizer-emulsifier is selected from among the potassium alkyl sulphonates and the sodium salts of disproportionated resin acids.

4. Process according to claim 1, wherein the vinylaromatic monomer is selected from among styrene and alphamethylstyrene.

5. Process according to claim 1, wherein the acrylic monomer is selected from among acrylic acid, methacrylic acid, methyl acrylate, methyl methacrylate, ethyl acrylate, ethyl methacrylate, acrylonitrile and methacrylonitrile.

6. Process according to claim 1, wherein the monomers to be grafted on polybutadiene are selected from among styrene-acrylonitrile, and styrene-acrylonitrilealphamethylstyrene.

7. Process according to claim 1, wherein the reaction temperature is comprised between 50°C and 80°C.

8. Process according to claim 1, wherein said water-soluble initiator is selected from among organic peroxides, potassium persulphate, ammonium persulphate, hydroperoxides and peroxyacids.

9. Process according to claim 1, wherein the initiator-activator system consists of $Fe^{2+}$– EDTA/cumene

hydroperoxide.

10. Process according to claim 1, wherein the initiator is used in an amount comprised between 0,005% and 1,0% by weight relative to the reactive compounds.

11. Process according to claim 1, wherein a chaintransfer agent, selected from among mercaptans, thioethers and alphamethylstyrene dimers, is additionally used in an amount between 0,001% and 1% of the weight of the reactive compounds.

12. Process according to claim 1, wherein said low-valence transition metal is selected from among Co, Ni and Cu.

## Ansprüche

1. Verfahren zum Aufpfropfen eines vinylaromatischen Monomers und eines Acrylmonomers auf Polybutadien durch Emulsionspolymerisation eines Gemisches aus einem vinylaromatischen Monomer und einem Acrylmonomer in Gegenwart eines monomodalen Polybutadienlatex mit einemTeilchendurchmesser von 0, 08 µm bis 0, 25 µm, welchem Latex ein Stabilisator-Emulgator zugesetzt worden ist, Zusetzen eines weiteren Anteiles an monodalem Polybutadien und einer weiteren Menge an dem vinylaromatischen und dem Acrylmonomer, sobald die Umwandlung der zugeführten Monomere 70% bis 90% beträgt, in Anwesenheit von 0,01 bis 3 Gew. -%, bezogen auf die reaktionsfähigen Verbindungen, eines wasserlöslichen Initiators, und Beenden der Emulsionspolymerisasion , dadurch gekennzeichnet, daß der wasserlösliche Initiator durch ein Reduktionmittel, ausgewählt unter Natriumbisulfit und Salzen oder Komplexen von Eisen und niedervalenten Übergangsmetallen, aktiviert wird.

2. Verfaren nach Anspruch 1, worin der Stabilisator-Emulgator unter Fettsäureseifen, Alkylsulfonaten, Arylakylsulfonaten, Arylalkylsulfonaten und Harzsäuresalzen ausgewählt wird.

3. Verfahren nach Anspruch 2, worin der Stabilisator-Emulgator unter den Kaliumalkylsulfonaten und den Natriumsalzen von disproportionierten Harzsäuren ausgewählt wird.

4. Verfahren nach Anspruch 1, worin das vinylaromatische Monomer unter Styrol und Alphamethylstyrol ausgewählt wird.

5. Verfahren nach Anspruch 1, worin das Acrylmonomer unter Acrylsäure, Methacrylsäure, Methylacrylat, Methylmethacrylat, Ethylacrylat, Ethylmethacrylat, Acrylnitril und Mechatrylnitril ausgewählt wird.

6. Verfahren nach Anspruch 1, worin die auf Polybutadien aufzupfropfenden Monomere unter Styrol/Acrylnitril und Styrol/Acrylnitril/Alphamethylstyrol ausgewählt werden.

7. Verfahren nach Anspruch 1, worin die Reaktionstemperatur zwischen 50°C und 80°C gehalten wird.

8. Verfahren nach Anspruch 1, worin der wasserlösliche Initiator unter organischen Peroxiden, Kaliumpersulfat, Ammoniumpersulfat, Hydroperoxiden und Peroxysäuren ausgewählt wird.

9. Verfaren nach Anspruch 1, worin das Initiator-Aktivator-System aus $Fe^{2+}$-EDTA/Cum olhydroperoxid besteht.

10. Verfahren nach Anspruch 1, worin der Initiator in einer Menge von 0, 005% bis 1, 0%, bezogen auf das Gewicht der reaktionsfähigen Verbindungen, verwendet wird.

11. Verfahren nach Anspruch 1, worin zusätzlich ein Kettenübertragungsmittel, ausgewählt unter Mercaptanen, Thioethem und Alphamethylstyroldimeren, in einer Menge von 0,001% bis 1%, bezogen auf das Gewicht der reaktionsfähigen Verbindungen, verwendet wird.

12. Verfahren nach Anspruch 1, worin das niedervalente Übergangsmetall unter Co, Ni und Cu ausgewählt wird.

## Revendications

1. Procédé de greffage d'un monomère vinylaromatique et d'un monomère acrylique sur du polybutadiène, par polymérisation en émulsion, en présence d'un latex de polybutadiène monomodal, présentant un diamètre de particules compris entre 0, 08 µm et 0,25 µm, auquel a été ajouté un émulsifiant-stabilisant, d'un mélange d'un monomère vinylaromatique et d'un monomère acrylique, addition d'une portion supplémentaire de polybutadiène monomodal et d'une quantité supplémentaire desdits monomères vinyl-aromatique et acrylique quand le taux de conversion de la réaction se situe entre 70 et 90% des monomères introduits, en présence de 0,001% à 3% en poids, par rapport aux composés réactifs, d'un amorceur hydrosoluble, et achèvement de la polymérisation en émulsion, le procédé étant caractérisé en ce que ledit amorceur hydrosoluble est activé par un agent réducteur choisi parmi le bisulfite de sodium et les sels ou complexes de fer et de métaux de transition à basse valence.

2. Procédé conforme à la revendication 1, dans lequel ledit émulsifiant-stabilisant est choisi parmi les savons d'acide gras, les alkyl-sulfonates, les aryl-alkylsulfonates, et les sels d'acide résinique.

3. Procédé conforme à la revendication 2, dans lequel ledit émulsifiant-stabilisant est choisi par les alkyl-sulfonates de potassium et les sels de sodium d'acides résiniques ayant subi une disproportionation.,

4. Procédé conforme à la revendication 1, dans lequel le monomère vinyl-aromatique est choisi parmi le styrène et l'$\alpha$-méthylstyrène.

5. Procédé conforme à la revendication 1, dans lequel le monomère acrylique est choisi parmi l'acide acrylique, l'acide méthacrylique, l'acrylate de méthyle, le méthacrylate de méthyle, l'acrylate d'éthyle, le méthacrylate d'éthyle, l'acrylonitrile et le méthacrylonitrile.

6. Procédé conforme à la revendication 1, dans lequel les monomères à greffer sur le polybutadiène sont choisis parmi les systèmes styrène-acrylonitrile et styrèneacrylonitrile-$\alpha$-méthylstyrène.

7. Procédé conforme à la revendication 1, dans lequel la température de réaction se situe entre 50 et 80°C.

8. Procédé conforme à la revendication 1, dans lequel ledit amorceur hydrosoluble est choisi parmi les peroxydes organiques, le persulfate de potassium, le persulfate d'ammonium, les hydroperoxydes et les peroxy-acides.

9. Procédé conforme à la revendication 1, dans lequel le système amorceur-activateur est constitué de $Fe^{2+}$ EDTA/hydroperoxyde de cumène.

10. Procédé conforme à la revendication 1, dans lequel l'amorceur est utilisé en une quantité comprise entre 0,005% et 1,0% en poids, par rapport aux composés réactifs.

11. Procédé conforme à la revendication 1, dans lequel un agent de transfert de chaîne, choisi parmi les mercaptans, les thioéthers et les dimères d'$\alpha$-méthylstyrène, est utilisé en plus en une quantité comprise entre 0,001% et 1% du poids des composés réactifs,

12. Procédé conforme à la revendication 1, dans lequel ledit métal de transition à basse valence est choisi parmi Co, Ni et Cu.